# EUROPÄISCHE PATENTSCHRIFT

(11) **EP 2 326 517 B1**
(45) Veröffentlichungstag und Bekanntmachung des Hinweises auf die Patenterteilung: **20.02.2013**
(21) Anmeldenummer: 09783228.1
(22) Anmeldetag: 21.09.2009
(51) Int. Cl.: B60B 3/04, B60B 3/12, B60B 3/08

(54) **FELGE FÜR EIN KRAFTFAHRZEUG**
RIM FOR A MOTOR VEHICLE
JANTE POUR VÉHICULE À MOTEUR

(30) Priorität: 22.09.2008 DE 102008048389
(43) Veröffentlichungstag der Anmeldung: 01.06.2011
(73) Patentinhaber: ThyssenKrupp Steel Europe AG, 47166 Duisburg (DE)
(72) Erfinder: STICH, Günter, 44869 Bochum (DE); TAMLER, Horst, Walter,, 58453 Witten (DE); BECKER, Jens-Ulrik, 47058 Duisburg (DE); HELLER, Thomas, 47229 Duisburg (DE); WUNDERLICH, Roland, 59192 Bergkamen (DE)
(74) Vertreter: Cohausz & Florack
(86) Internationale Anmeldenummer: PCT/EP2009/062181
(87) Internationale Veröffentlichungsnummer: WO 2010/031863

(56) Entgegenhaltungen:
- WO-A1-98/33666
- FR-A1- 2 125 544
- JP-A- 2001 219 701
- US-A- 2 439 881
- US-A- 3 993 356

## Beschreibung

Die Erfindung betrifft eine aus einem Stahlwerkstoff bestehende Felge für ein Kraftfahrzeug, wie Personenkraftwagen oder leichtere und schwere Nutzfahrzeuge.

Felgen dieser Art werden üblicherweise aus warmgewalztem Stahl hergestellt oder aus Leichtmetall gegossen oder geschmiedet. Stahlfelgen zeichnen sich dabei durch einen günstigen Herstellpreis und gute Gebrauchseigenschaften aus. Dennoch sind früher im Hinblick auf eine Minimierung der ungefederten Massen des Fahrzeugs aus Leichtmetall bestehende Felgen wegen ihres geringeren Gewichts als besonders günstig angesehen worden. Jedoch ist es heute möglich, bei einem deutlich günstigeren Herstellpreis aus hochfesten und dennoch gut verformbaren Stahlblechen Felgen zu fertigen, die aufgrund ihrer geringen Wandstärken ein noch geringeres Gewicht als Leichtmetallfelgen besitzen.

Dem allgemeinen Sprachgebrauch entsprechend sind Stahlfelgen üblicherweise aus dem so genannten "Felgenband" und einer "Radschüssel" zusammengesetzt. Auf dem Felgenband sitzt im Gebrauch der Reifen des aus dem Reifen und der Felge gebildeten Rades, während über die Radschüssel die Verbindung des Rades mit der jeweiligen Achse des Fahrzeugs hergestellt wird.

Die Radschüsseln und auch die Felgenbänder von Stahlfelgen werden heute üblicherweise aus warmgewalzten hochfesten Stählen hergestellt, deren Zugfestigkeit im Bereich von 600 MPa liegt. Ein typischer Vertreter der für diesen Zweck in Frage kommenden Stähle ist unter der Bezeichnung "DP-W600" auf dem Markt erhältlich. Er enthält standardmäßig neben Eisen und unvermeidbaren Verunreinigungen (in Gew.-%) bis zu 0,12 % C, bis zu 0,08 % Al, bis zu 1,5 % Mn, bis zu 0,8 % Si, in Summe bis zu 1,00 % Cr und Mo, bis zu 0,06 % P, bis zu 0,005 % B, bis zu 0,01 % S und in Summe bis zu 0,15 % Nb und Ti. Ein entsprechend zusammengesetzter hochfester und gleichzeitig gut umformbarer Dualphasenstahl ist auch in der DE 199 36 151 A1 beschrieben.

Um die Möglichkeiten der optischen Gestaltung von Stahlfelgen und gleichzeitig ihren Schutz gegen Korrosion zu verbessern, ist in der JP 2001-219701 vorgeschlagen worden, die Radschüssel einer solchen Stahlfelge aus einem nach Art eines Sandwiches aufgebauten mehrlagigen Flachmaterial zu fertigen. Die erste Lage dieses Materials besteht aus einem mit einer vor Korrosion schützenden metallischen Beschichtung versehenen Stahlblech und nimmt im praktischen Gebrauch die auf der Felge lastenden Belastungen auf. Auf die Stahlblechlage ist eine zweite Lage aufgetragen, auf der wiederum eine dritte Lage liegt. Die zweite Lage kann aus einem Harz oder desgleichen bestehen und hat im Sinne eines Füllmaterials die Aufgabe, das Eindringen von Feuchtigkeit in den zwischen der ersten und der dritten Lage gegebenenfalls vorhandenen Raum zu verhindern. Auf diese Weise soll die erste Stahlblechlage zusätzlich vor Korrosion geschützt werden. Die dritte Lage des Materials der Radschüssel ist bei der bekannten Felge auf der Seite angebracht, die im an einem Fahrzeug montierten Zustand für den Betrachter sichtbar ist. Sie kann beispielsweise aus Aluminium, Edelstahl oder einem anderen vom Betrachter als besonders hochwertig angesehenen Werkstoff hergestellt sein. Ihre Funktion besteht im Wesentlichen darin, dem Betrachter einen besonders guten optischen Eindruck der Felge zu vermitteln.

Neben dem voranstehend erläuterten Stand der Technik ist aus der WO 98/33666 A1 eine Felge für ein Kraftfahrzeug bekannt, bei der zur Minimierung von Schallemissionen das Felgenband aus einem Sandwich-Material gebildet ist. Das Sandwich-Material weist dabei drei Lagen auf, von denen die beiden äußeren aus einem formhaltigen, jedoch nicht näher bezeichneten Material und die innere Lage aus einem stark schalldämmenden Material bestehen sollen.

Zusätzlich ist aus der US 3,993,356 A ein Rad für ein Raupenfahrzeug bekannt, bei dem ebenfalls zur Minimierung der Schallemissionen ein Teil der Radschüssel oder eine Radabdeckung aus einem ebenfalls dreilagigen Sandwich-Material gebildet sind. Die erste äußere Schicht dieses Materials dient als Träger und besteht beispielsweise aus Stahl. Die darauf liegende innere Schicht des Sandwich-Materials besteht aus einem visko-elastischen Werkstoff, der schalldämmende Eigenschaften besitzen soll. Die zweite äußere Schicht des Sandwich-Materials dient schließlich als einfache Abdeckung der inneren Schicht ohne besondere weitere Funktion.

Bei einer aus der US 2,439,881 A bekannten Felge für ein Fahrzeugrad sind im Bereich der Durchgangsöffnungen, die in die Radschüssel zum Durchführen der zum Befestigen der Felge an der Fahrzeugnabe vorgesehenen Schrauben vorgesehen sind, Verstärkungsabschnitte eingesetzt, die aus einem besonders festen Material bestehen. Die Verstärkungsabschnitte sind dabei durch Umfalzen oder Anpressen von Material der Radschüssel form- und kraftschlüssig in der Radschüssel gehalten.

Schließlich ist aus der FR 2.125.544 A1 eine Felge für ein Fahrzeugrad bekannt, bei der die Radschüssel aus zwei in Achsrichtung beabstandet zueinander angeordneten, um einen zentralen, massiv ausgebildeten Ringkörper umlaufenden Ringabschnitten gebildet ist, die aus einem Leichtmetall-Werkstoff bestehen. Der Zwischenraum zwischen den Ringabschnitten ist dabei ebenfalls durch ein mit den Ringscheiben verklebtes Kunststoffelement gefüllt.

Trotz der in der Vergangenheit erzielten Erfolge bei der Gewichtsreduzierung besteht seitens der Verwender nach wie vor der Wunsch, das Gewicht von Kraftfahrzeugfelgen weiter zu verringern. Dies trägt nicht nur zur Verbesserung der Fahreigenschaften in Folge minimierter ungefederter Massen bei, sondern vermindert auch das Gesamtgewicht des jeweiligen Fahrzeugs.

Ausgehend von dem oben erläuterten, in der JP 2001-219701 A beschriebenen Stand der Technik bestand die Aufgabe der Erfindung darin, eine kostengünstig herstellbare Felge zu schaffen, die bei geringem Gewicht die im praktischen Betrieb auf einer solchen Felge lastenden Kräfte sicher aufnehmen kann.

Diese Aufgabe ist erfindungsgemäß durch eine Felge mit den in Anspruch 1 angegebenen Merkmalen gelöst worden. Vorteilhafte Ausgestaltungen der Erfindung sind in den auf Anspruch 1 rückbezogenen Ansprüchen genannt und werden nachfolgend im Einzelnen erläutert.

Eine erfindungsgemäße Felge weist wie der Stand der Technik eine aus Stahlblech gefertigte Radschüssel und ein um die Radschüssel umlaufendes Felgenband auf. Erfindungsgemäß ist dabei das Stahlblech der Radschüssel aus mindestens drei aufeinanderliegenden und durch Walzplattieren unlösbar miteinander verbundenen Stahllagen gebildet, von denen die innen liegende Kernlage eine geringere Festigkeit als die außen liegenden Außenlagen aufweist. Dabei ist die Erfindung nicht darauf beschränkt, nur die Radschüssel einer Stahlfelge aus dem erfindungsgemäß verwendeten mindestens dreilagigen Stahlflachmaterial herzustellen. Vielmehr kann auch das Felgenband aus einem solchen Material bestehen.

Die Erfindung geht von der Erkenntnis aus, dass die im praktischen Betrieb auftretenden, für die Auslegung einer Radschüssel einer Felge wesentlichen maximalen Spannungen in einer oberflächennahen Schicht des Blechs auftreten, aus dem die Radschüssel geformt ist. Indem erfindungsgemäß nun vorgeschlagen wird, für die Herstellung ein aus mindestens drei Lagen zusammengesetztes Stahlblech zu verwenden, kann den in der Praxis höchstbelasteten Schichten der Felgenradschüssel jeweils eine aus einem besonders hochfesten Stahl bestehende Außenlage zugeordnet werden. Die Kernlage, über die die Außenlagen der Radschüssel miteinander verbunden sind, besteht erfindungsgemäß dagegen aus einem weniger festen Stahl. Dieser besitzt dafür aber eine bessere Verformbarkeit als die festeren äußeren Lagen.

Durch diesen mehrschichtigen Aufbau des erfindungsgemäß verarbeiteten Stahlflachprodukts ist es möglich, eine aus solchem Flachmaterial herausgetrennte Stahlblechplatine trotz der hohen Festigkeit der Außenlagen einwandfrei zu der Radschüssel und gegebenenfalls auch zu dem Felgenband zu formen.

Gleichzeitig kann aufgrund der Abstimmung der Festigkeitseigenschaften der einzelnen Lagen des erfindungsgemäß verarbeiteten Stahlblechmaterials auf die in der Praxis auftretenden Belastungen die Dicke und damit einhergehend das Gewicht der Radschüssel deutlich reduziert werden. So haben Berechnungen und praktische Versuche gezeigt, dass das Gewicht einer Stahlfelge, bei der mindestens die Radschüssel in erfindungsgemäßer Weise aus einem drei- oder mehrlagigen Stahlverbundwerkstoff besteht, bei gleicher Belastbarkeit regelmäßig um 10 - 20 % leichter als eine aus konventionellem einlagigen Stahlblech geformte Felge sein kann.

Das mindestens dreilagige, vorzugsweise als Warmband verarbeitete Stahlblech, aus dem erfindungsgemäß die Radschüssel und gegebenenfalls auch das Felgenband hergestellt sind, lässt sich durch Warmwalzplattieren so herstellen, dass die Lagen des Stahlblechs dauerhaft unlösbar miteinander verbunden sind.

Ein Verfahren, das dies ermöglicht, ist beispielsweise in der deutschen Patentschrift DE 10 2005 006 606 B3 beschrieben. Gemäß diesem Verfahren werden mindestens zwei im Wesentlichen quaderförmige Platten, aus jeweils einem anderen Stahlwerkstoff erzeugt. Dann werden die im aufeinander gelegten Zustand einander zugeordneten Oberflächen der Platten einer abtragenden Oberflächenbehandlung unterzogen. Ziel dieser Behandlung ist, die Oberflächenform der einen Platte an die Oberflächenform der anderen Platte derart anzupassen, dass die beiden Oberflächen bei aufeinander liegenden Platten im Wesentlichen dicht aufeinander liegen. Dazu werden die betreffenden Oberflächen von unerwünschten Fremdpartikeln wie Zunder befreit und die Oberflächen chemisch-physikalisch aktiviert. Die Platten werden daraufhin mit ihren oberflächenbehandelten Oberflächen aufeinander gelegt und die aufeinander liegenden Platten miteinander zu einem Plattenpaket verschweißt. Dieses Plattenpaket wird anschließend auf eine Warmwalzanfangstemperatur erwärmt und zu einem coilfähigen walzplattierten Warmband warmgewalzt. Das so walzplattierte Warmband wird schließlich zu einem Coil gehaspelt. Auf diese Weise lassen sich walzplattierte Warmbänder bei deutlich vermindertem verfahrenstechnischen Aufwand kostengünstig erzeugen.

Ein im Hinblick auf die Belastbarkeit einerseits und die Verformbarkeit des mindestens dreilagigen Stahlblechs optimales Dickenverhältnis zwischen den Außenlagen und der Kernlage ergibt sich, wenn die Dicke der Außenlagen jeweils 5 - 40 %, insbesondere 5 - 30 %, der Gesamtdicke des Stahlblechs der Radschüssel einnimmt. Dabei müssen die Außenlagen nicht gleich dick sein. Vielmehr wird die tatsächliche Dicke der Außenlagen dabei abhängig von der Festigkeit des jeweils für die Außenlagen verwendeten Stahlwerkstoffs, seiner in Kombination mit dem Stahlwerkstoff der Kernlage gegebene Verformbarkeit und den in der Praxis zu erwartenden Belastungszuständen gewählt.

Eine Möglichkeit, in erfindungsgemäßer Weise eine Felge mit einer besonders guten optischen Erscheinung bei gleichzeitig optimierter Korrosionsbeständigkeit herzustellen, besteht darin, dass mindestens eine der Außenlagen des Stahlblechs der Radschüssel aus einem nichtrostenden Stahl besteht. Bei der betreffenden Außenlage handelt es sich dabei bevorzugt um diejenige, die nach der Montage der Felge an einem Fahrzeug außen liegend angeordnet ist und vom Betrachter wahrgenommen wird. Die dann auf der dem Fahrzeug zugewandten Seite angeordnete Außenlage kann dagegen aus einem beispielsweise durch eine entsprechende Korrosionsschutzbeschichtung geschützten besonders robusten Stahlwerkstoff bestehen.

Stehen für die einzelnen Außenlagen des erfindungsgemäß für die Herstellung der Radschüssel verwendeten dreilagigen Stahlfachproduktes Blechmaterialien zur Verfügung, die eine für den jeweiligen Anwendungszweck ausreichende Oberflächenbeschaffenheit und Korrosionsbeständigkeit mitbringen, so kann es aus fertigungstechnischer Sicht und unter Kostengesichtspunkten jedoch auch sinnvoll sein, wenn die Außenlagen aus demselben Stahlwerkstoff bestehen.

Für die Außenlagen des erfindungsgemäß bevorzugt als Warmband verarbeiteten und kalt zu der Radschüssel verformten Stahlverbundwerkstoffs eignen sich beispielsweise an sich bekannte martensitische Stähle, Dualphasenstähle, Complexphasenstähle oder rostfreie Ferritaustenitstähle.

Damit die aus einem dieser Stähle bestehenden Außenlagen die im praktischen Einsatz auftretenden Belastungen der Radschüssel sicher aufnehmen können, gleichzeitig aber ausreichend gut verformbar sind, sollten die Stähle der Außenlage eine Streckgrenze von 600 MPa bis 1150 MPa besitzen.

Typischerweise enthalten solche für die Außenlagen des erfindungsgemäß verarbeiteten mehrlagigen Stahlblechs bestimmten Stähle neben Eisen und unvermeidbaren Verunreinigungen (in Gew.-%) bis zu 0,24 % C, bis zu 3,0 % Mn, insbesondere bis zu 2,5 % Mn, bis zu 1,5 % Si, bis zu 0,05 % P, bis zu 0,02 % S, bis zu 25 % Cr, insbesondere bis zu 24,5 % Cr, bis zu 1,0 % Mo, insbesondere bis zu 0,6 % Mo, in Summe bis zu 0,2 % Nb und Ti, bis zu 0,25 % N, bis zu 2,5 % Al, insbesondere bis zu 1,7 % Al, bis zu 0,25 % V, bis zu 0,01 % B, bis zu 8,0 % Ni, insbesondere bis zu 6,0 % Ni, und bis zu 4,0 % Cu, insbesondere bis zu 0,8 % Cu.

Bevorzugt ist dabei der C-Gehalt des Stahls der Außenlage auf höchstens 0,2 Gew.-% beschränkt, um die erforderliche Kaltumformbarkeit und die für die Verbindung von Radschüssel und Felgenband erforderlichen Schweißeigenschaften bei den üblicherweise angewendeten Schweißverfahren sicherzustellen.

Ebenso kann es vorteilhaft sein, wenn der Mn-Gehalt des Stahls der Außenlage höchstens 2,5 Gew.-% , insbesondere bis zu 2,2 Gew.-%, beträgt, um übermäßig starke Mikroseigerungen zu vermeiden, die zur Bildung harter Umwandlungsprodukte und damit zur Verschlechterung der Kaltumformbarkeit führen würden.

Sofern höchstens 1,0 Gew.-% Si im erfindungsgemäß für mindestens eine der Außenlage verwendeten Stahl vorhanden ist, wird eine optimal glatte Oberflächenbeschaffenheit des erhaltenen Stahlblechs erreicht.

Auch kann es günstig sein, den Al-Gehalt des Stahls der Außenlage auf höchstens 2,0 Gew.-% , insbesondere bis zu 1,2 Gew.-%, zu beschränken, da auf diese Weise die bei der Herstellung eines beschichteten Warmbands auftretenden Oxidationsprodukte so gesteuert werden, dass nach dem Beizen eine gute Oberflächenausbildung erreicht wird.

Ein innerhalb der voranstehend allgemein angegebenen Legierungsvorschrift liegender, die an die Außenlagen eines erfindungsgemäß verarbeiteten drei- oder mehrlagigen Stahlblechs gestellten Anforderungen besonders gut erfüllender nicht rostender Stahl enthält (in Gew.-%) bis zu 0,05 % C, 20 - 25 % Cr, insbesondere 21,5 - 24,5 % Cr, 3,0 - 8,0 % Ni, insbesondere 3,0 - 5,5 % Ni, 0,05 - 1,0 % Mo, insbesondere 0,05 - 0,6 % Mo, 0,005 - 0,25 % N, insbesondere 0,05 - 0,2 % N, sowie optional eines oder mehrere Elemente aus der Gruppe "Mn, Si" mit der Maßgabe Mn: 0,1 - 2,0 %, Al: bis zu 0,1 %, Si: bis zu 1,0 %, und als Rest Eisen und unvermeidbare Verunreinigungen.

Untersuchungen haben gezeigt, dass der für die Kernlage des erfindungsgemäß verarbeiteten, mindestens dreilagigen Stahlblechs verwendete Stahl eine optimale Kombination aus Tragbeitrag und Verformbarkeit aufweist, wenn die Kernlage eine Streckgrenze von 200 - 500 MPa, insbesondere 300 - 500 MPa, aufweist. Ein solches Eigenschaftsprofil kann beispielsweise ein Dualphasenstahl zur Verfügung stellen.

Ein für die Kernlage besonders geeigneter Stahl enthält neben Eisen und unvermeidbaren Verunreinigungen (in Gew.-%) bis zu 0,25 % C, bis zu 2,0 % Al, insbesondere bis zu 1,8 % Al, bis zu 2,5 % Mn, bis zu 1,0 % Si, in Summe bis zu 1,0 % Cr und Mo, bis zu 0,08 % P, bis zu 0,02 % S, bis zu 0,01 % B, bis zu 0,2 % V sowie in Summe bis zu 0,25 % Nb und Ti. Eine für den erfindungsgemäßen Verwendungszweck besonders gute Eigenschaftskombination der Kernlage ergibt sich, wenn die Kernlage neben Eisen und unvermeidbaren Verunreinigungen (in Gew.-%) 0,07 - 0,17 % C, 0,95 - 2,2 % Mn, 0,05 - 0,8 % Si, 0,03 - 0,09 % P, bis zu 0,015 % S, in Summe 0,4 - 1,0 % Mo + Cr, in Summe bis zu 0,015 % Nb + Ti, 0,02 - 2,0 % Al und bis zu 0,005 % B enthält.

Im Fall, dass mindestens eine der Außenlagen aus einem nicht rostenden Stahl mit einem Cr-Gehalt von mindestens 20 Gew.-% besteht, ist es vorteilhaft, wenn der C-Gehalt der Kernlage höchstens 0,1 Gew.-% beträgt. Auf diese Weise lässt sich die Bildung von Chromcarbiden an den Grenzschichten zwischen der Kernlage und der jeweiligen Außenlage vermeiden, die sich andernfalls im Zuge einer Wärmebehandlung bzw. während des Warmwalzens bilden und die Haftung der Außenlage an der Kernlage verschlechtern könnten.

Nachfolgend wird die Erfindung anhand einer Ausführungsbeispiele darstellenden Zeichnung näher erläutert.

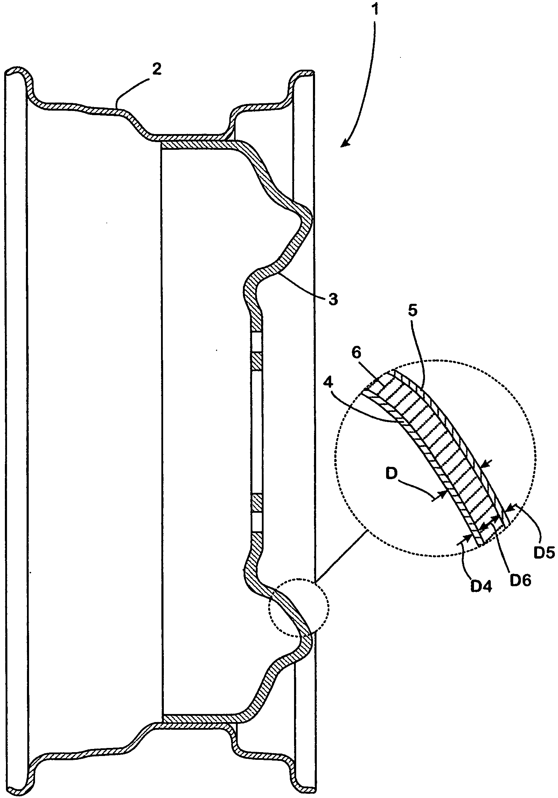

Die einzige Figur zeigt schematisch eine Felge 1 in einem Querschnitt.

Die Felge 1 ist in an sich bekannter Weise aus einem getrennt vorgefertigten ringförmigen Felgenband 2 und einer topfförmigen Radschüssel 3 zusammengesetzt, die in der Öffnung des Felgenbandes sitzt und mit ihrer Umfangsfläche an der Innenfläche des Felgenbandes anliegt. Die feste Verbindung zwischen dem Felgenband 2 und der Radschüssel 3 ist durch abschnittsweise ausgeführte und in regelmäßigen Abständen über den Innenumfang des Felgenbandes 2 verteilte Schweißnähte hergestellt.

Das Felgenband 2 ist aus einem Blechzuschnitt kaltgeformt. Der Blechzuschnitt ist beispielsweise aus einem warmgewalzten Stahlband abgeteilt worden, das eine Streckgrenze von ca. 330 MPa und eine Zugfestigkeit von 660 MPa aufwies. Es enthielt neben Eisen und unvermeidbaren Verunreinigungen (in Gew.-%) bis zu 0,07 - 0,09 % C, 0,02 - 0,04 % Al, 0,95 - 1,05 % Mn, 0,05 - 0,08 % Si, in Summe 0,4 - 0,55 % Mo und Cr, 0,03 - 0,045 % P, bis zu 0,0005 % B, bis zu 0,003 % S, bis zu 0,01 % V und in Summe bis zu 0,04 % Ti und Nb. Daneben kann das Felgenband aus den unter der Bezeichnung DD11-14, aus S300MC - S460MC, aus S225 - S355, aus HDT450X - HDT700X oder aus Standard-Güten entsprechender ausländischer Normen bestehen.

Die Radschüssel 3 ist dagegen aus einer Stahlblechplatine kaltgeformt worden, die aus einem als dreilagiges Warmband hergestellten Stahlblech abgeteilt worden ist. Das betreffende Warmband ist dabei beispielsweise auf die in der DE 10 2005 006 606 B1 beschriebene Art und Weise erzeugt worden.

Bei einer ersten Ausführung bestanden die Außenlagen 4,5 der dreilagigen Stahlblechplatine, aus der die Radschüssel 3 der Felge geformt worden ist, aus einem handelsüblichen martensitischen Stahl mit einer Zugfestigkeit Rm von 1200 MPa und einer Streckgrenze von 900 MPa, der (in Gew.-%) 0,11 - 0,125 % C, 1,35 - 1,5 % Mn, 0,05 - 0,1 % Si, bis zu 0,015 % P, in Summe bis zu 0,35 % Cr + Mo, bis zu 0,003 % S, in Summe bis zu 0,035 - 0,055 % Ti und Nb, 0,015 - 0,035 % Al, bis zu 0,05 % V sowie 0,001 - 0,002 % B enthielt.

Die Kernlage 6 der Stahlblechplatine, aus der die Radschüssel 3 gefertigt worden ist, bestand dagegen aus demselben Stahl wie das Felgenband 2.

Die Außenlagen 4,5 waren bei dieser Ausführung gleich dick. Der Anteil ihrer Dicke D4,D5 an der Gesamtdicke D des Stahlblechs betrug jeweils 10 %, so dass die verbleibende Dicke D6 der Kernlage 6 in diesem Ausführungsbeispiel 80 % der Gesamtdicke D betrug.

Dadurch, dass bei dem voranstehend beschriebenen Ausführungsbeispiel die Außenlagen 4,5 der Radschüssel 3 durch einen hochfesten Stahl gebildet sind, während die Kernlage aus einem Stahl besteht, der eine optimale Kombination aus guter Verformbarkeit und Festigkeit besitzt, konnte die Radschüssel 3 trotz einer vergleichbar komplexen Formgebung und großen Tiefziehverhältnissen problemlos kaltgeformt werden. Bei gleicher Belastbarkeit war dabei die Gesamtdicke D des dreilagigen Stahlblechs der Radschüssel 3 um 27 % geringer als die Dicke einer hier nicht gezeigten Radschüssel, die bei gleicher Formgebung aus einem konventionellen einlagigen Stahlblech der oben für das Felgenband 2 angegebenen Zusammensetzung hergestellt worden ist. Die Masse der erfindungsgemäß aus dem dreilagigen Stahlblech erzeugten Radschüssel 3 lag dabei um ca. ein Kilogramm unter dem Gewicht der konventionell hergestellten Radschüssel.

Bei einem zweiten Ausführungsbeispiel bestanden die Außenlagen 4,5 des dreilagigen warmgewalzten Stahlblechs, aus dem die Radschüssel 3 kaltgeformt worden ist, aus einem unter der Werkstoffnummer 1.4362 (C: 0,02 Gew.-%, Cr: 22 Gew.-%, Ni: 3,7 Gew.-%, Mo: 0,15 Gew.-%, N: 0,15 Gew.-%, Rest Eisen und unvermeidbare Verunreinigungen) genormten Edelstahl, während die Kernlage 6 des betreffenden Stahlblechs aus einem gut verformbaren Stahl mit einer gegenüber dem Stahl 1.4362 geringeren Festigkeit bestand. Der C-Gehalt der Kernlage 6 war dabei auf weniger als 0,1 Gew.-% beschränkt, um die Bildung von CrC an den Grenzschichten zwischen den Außenlagen 4,5 und der Kernlage 6 beim Erwärmen des vor dem Warmwalzen aus den Außenlagen 4,5 und der Kernlage 6 gebildeten Blechpakets und anschließenden Warmwalzen zu vermeiden.

### BEZUGSZEICHEN

- 1: Felge
- 2: Felgenband
- 3: Radschüssel
- 4: erste Außenlage der Radschüssel
- 5: zweite Außenlage der Radschüssel
- 6: Kernlage der Radschüssel
- D: Gesamtdicke des dreilagigen Stahlblechs, aus dem die Radschüssel 3 hergestellt ist
- D4: Dicke der Außenlage 4
- D5: Dicke der Außenlage 5
- D6: Dicke der Kernlage 6

## Patentansprüche

1. Felge für ein Kraftfahrzeug, mit einer aus Stahlblech gefertigten Radschüssel (3) und einem um die Radschüssel (3) umlaufenden Felgenband (2),
**dadurch gekennzeichnet, dass** das Stahlblech der Radschüssel (3) aus mindestens drei aufeinanderliegenden und durch Walzplattieren unlösbar miteinander verbundenen Stahllagen gebildet ist, von denen die innen liegende Kernlage (6) eine geringere Festigkeit als die außen liegenden Außenlagen (4,5) aufweist.

2. Felge nach Anspruch 1, **dadurch gekennzeichnet, dass** auch das Stahlblech des Felgenbandes (2) aus mindestens drei aufeinanderliegenden und durch Walzplattieren unlösbar miteinander verbundenen Stahllagen gebildet ist, von denen die innen liegende Kernlage (6) eine geringere Festigkeit als die außen liegenden Außenlagen (4,5) aufweist.

3. Felge nach einem der voranstehenden Ansprüche,
**dadurch gekennzeichnet, dass** die Dicke (D4,D5) der Außenlagen (4,5) jeweils 5 - 40 % der Gesamtdicke (D) des Stahlblechs der Radschüssel (3) einnimmt.

4. Felge nach einem der voranstehenden Ansprüche,
**dadurch gekennzeichnet, dass** mindestens eine der Außenlagen (4,5) des Stahlblechs der Radschüssel (3) aus einem nichtrostenden Stahl besteht.

5. Felge nach einem der voranstehenden Ansprüche,
**dadurch gekennzeichnet, dass** die Außenlagen (4,5) aus demselben Stahlwerkstoff bestehen.

6. Felge nach einem der voranstehenden Ansprüche,
**dadurch gekennzeichnet, dass** mindestens eine der Außenlagen (4,5) aus einem Stahl erzeugt ist, der neben Eisen und unvermeidbaren Verunreinigungen enthält (in Gew.-%)
| | |
|---|---|
| C: | bis zu 0,24 %, |
| Mn: | bis zu 3,0 %, |
| Si: | bis zu 1,5 %, |
| P: | bis zu 0,05 %, |
| S: | bis zu 0,02 %, |
| Cr: | bis zu 25 %, |
| Mo: | bis zu 1,0 %, |
| Nb,Ti: | in Summe bis zu 0,2 %, |
| N: | bis zu 0,25 %, |
| Al: | bis zu 2,5 %, |
| V: | bis zu 0,25 %, |
| B: | bis zu 0,01 %, |
| Ni: | bis zu 8,0 %, |
| Cu: | bis zu 4,0 %. |

7. Felge nach Anspruch 6, **dadurch**
**gekennzeichnet, dass** der C-Gehalt des Stahls der Außenlage (4,5) höchstens 0,2 Gew.-% beträgt.

8. Felge nach Anspruch 6 oder 7, **dadurch**
**gekennzeichnet, dass** der Mn-Gehalt des Stahls der Außenlage (4,5) höchstens 2,5 Gew.-% beträgt.

9. Felge nach einem der Ansprüche 6 bis 8,
**dadurch gekennzeichnet, dass** der Si-Gehalt des Stahls der Außenlage (4,5) höchstens 1,0 Gew.-% beträgt.

10. Felge nach einem der Ansprüche 6 bis 9,
**dadurch gekennzeichnet, dass** der Al-Gehalt des Stahls der Außenlage (4,5) höchstens 2,0 Gew.-% beträgt.

11. Felge nach einem der Ansprüche 6 bis 10,
**dadurch gekennzeichnet, dass** der Stahl der Außenlage (4,5) neben Eisen und unvermeidbaren Verunreinigungen enthält (in Gew.-%)
| | |
|---|---|
| C: | bis zu 0,05 %, |
| Cr: | 20 - 25 %, |
| Ni: | 3,0 - 8,0 %, |
| Mo: | 0,05 - 1,0 %, |
| N: | 0,005 - 0,25 %, |
sowie optional eines oder mehrere Elemente aus der Gruppe "Mn, Al, Si" mit der Maßgabe
| | |
|---|---|
| Mn: | 0,1 - 2,0 %, |
| Al: | bis zu 0,1 % |
| Si: | bis zu 1,0 %. |

12. Felge nach einem der voranstehenden Ansprüche,
**dadurch gekennzeichnet, dass** die Kernlage (6) aus einem Stahl erzeugt ist, der neben Eisen und unvermeidbaren Verunreinigungen enthält (in Gew.-%)
| | |
|---|---|
| C: | bis zu 0,25 %, |
| Al: | bis zu 2,0 %, |
| Mn: | bis zu 2,5 %, |
| Si: | bis zu 1,0 %, |
| Cr,Mo: | in Summe bis zu 1,0 %, |
| P: | bis zu 0,08 %, |
| S: | bis zu 0,02 %, |
| B: | bis zu 0,01 %, |
| V: | bis zu 0,2 %, |
| Nb,Ti: | in Summe bis zu 0,25 %. |

13. Felge nach einem der voranstehenden Ansprüche,
**dadurch gekennzeichnet, dass** das Stahlblech der Radschüssel (3) Warmband-Stahlblech ist.

14. Felge nach einem der voranstehenden Ansprüche,
**dadurch gekennzeichnet, dass** die Kernlage (6) aus einem warmgewalzten Dualphasen-Stahlblech gebildet ist, der eine Streckgrenze von 200 - 550 MPa aufweist.

15. Felge nach einem der voranstehenden Ansprüche,
**dadurch gekennzeichnet, dass** mindestens einer der Außenlagen (4,5) auf einem martensitischen Stahl, einem Complexphasenstahl oder einem rostfreien Ferritaustenitstahl besteht, deren Streckgrenze 600 - 1150 MPa beträgt.

16. Felge nach einem der voranstehenden Ansprüche,
**dadurch gekennzeichnet, dass** mindestens eine der Außenlagen (4,5) aus einem nicht rostenden Stahl mit einen Cr-Gehalt von mindestens 20 Gew.-% besteht und der C-Gehalt der Kernlage (6) höchstens 0,1 Gew.-% beträgt.

## Claims

1. Wheel rim for a motor vehicle, with a wheel disc (3) made of steel sheet and a rim flap (2) running around the circumference of the wheel disc (3), **characterised in that** the steel sheet of the wheel disc (3) is formed from at least three superimposed steel layers, joined to one another by roll-bonding in a non-detachable manner, of which the inner core layer (6) has a lower strength than the outer layers (4, 5).

2. Wheel rim according to Claim 1, **characterised in that** the steel sheet of the rim flap (2) also consists of at least three superimposed steel layers joined to one another by roll-bonding in a non-detachable manner, of which the inner core layer (6) has a lower strength than the outer layers (4, 5).

3. Wheel rim according to any one of the preceding claims, **characterised in that** the thickness (D4, D5) of the outer layers (4, 5) in each case accounts for 5 - 40 % of the total thickness (D) of the steel sheet of the wheel disc (3).

4. Wheel rim according to any one of the preceding claims, **characterised in that** at least one of the outer layers (4, 5) of the steel sheet of the wheel disc (3) consists of a rust-resistant steel.

5. Wheel rim according to any one of the preceding claims, **characterised in that** the outer layers (4, 5) consist of the same steel material.

6. Wheel rim according to any one of the preceding claims, **characterised in that** at least one of the outer layers (4, 5) is manufactured from a steel which contains, in addition to iron and unavoidable impurities, (in % by weight):
| | |
|---|---|
| C: | up to 0.24 %, |
| Mn: | up to 3.0 %, |
| Si: | up to 1.5 %, |
| P: | up to 0.05 %, |
| S: | up to 0.02 %, |
| Cr: | up to 25 %, |
| Mo: | up to 1.0 %, |
| Nb, Ti: | in total up to 0.2 %, |
| N: | up to 0.25 %, |
| Al: | up to 2.5 %, |
| V: | up to 0.25 %, |
| B: | up to 0.01 %, |
| Ni: | up to 8.0 %, |
| Cu: | up to 4.0 %. |

7. Wheel rim according to Claim 6, **characterised in that** the C content of the steel of the outer layer (4, 5) amounts to a maximum of 0.2 % by weight.

8. Wheel rim according to Claim 6 or 7, **characterised in that** the Mn content of the steel of the outer layer (4, 5) amounts to a maximum of 2.5 % by weight.

9. Wheel rim according to any one of Claims 6 to 8, **characterised in that** the Si content of the steel of the outer layer (4, 5) amounts to a maximum of 1.0 % by weight.

10. Wheel rim according to any one of Claims 6 to 9, **characterised in that** the Al content of the steel of the outer layer (4, 5) amounts to a maximum of 2.0 % by weight.

11. Wheel rim according to any one of Claims 6 to 10, **characterised in that** the steel of the outer layer (4, 5) contains, in addition to iron and unavoidable impurities, (in % by weight):
| | |
|---|---|
| C: | up to 0.05 %, |
| Cr: | 20 - 25 %, |
| Ni: | 3.0 - 8.0 %, |
| Mo: | 0.05 - 1.0 %, |
| N: | 0.005 - 0.25 %, |
as well as, optionally, one or more elements from the group of "Mn, Al, Si", with the proportions:
| | |
|---|---|
| Mn: | 0.1 - 2.0 %, |
| Al: | up to 0.1 % |
| Si: | up to 1.0 %. |

12. Wheel rim according to any one of the preceding claims, **characterised in that** the core layer (6) is manufactured from a steel which, in addition to iron and unavoidable impurities, contains (in % by weight):
| | |
|---|---|
| C: | up to 0.25 %, |
| Al: | up to 2.0 %, |
| Mn: | up to 2.5 %, |
| Si: | up to 1.0 %, |
| Cr, Mo: | in total up to 1.0 %, |
| P: | up to 0.08 %, |
| S: | up to 0.02 %, |
| B: | up to 0.01 %, |
| V: | up to 0.2 %, |
| Nb, Ti: | in total up to 0.25 %. |

13. Wheel rim according to any one of the preceding claims, **characterised in that** the steel sheet of the wheel disc (3) is hot-strip steel sheet.

14. Wheel rim according to any one of the preceding claims, **characterised in that** the core layer (6) is formed from a hot-rolled dual-phase steel sheet, which has a yield strength of 200 - 550 MPa.

15. Wheel rim according to any one of the preceding claims, **characterised in that** at least one of the outer layers (4, 5) consists of a martensitic steel, a complex phase steel or a rust-proof ferrite austenitic steel, of which the yield strength is 600 - 1150 MPa.

16. Wheel rim according to any one of the preceding claims, **characterised in that** at least one of the outer layers (4, 5) consists of a rust-resistant steel with a Cr content of at least 20 % by weight, and the C content of the core layer (6) amounts to a maximum of 0.1 % by weight.

## Revendications

1. Jante pour un véhicule automobile, comprenant un disque de roue (3) fabriqué dans une tôle d'acier et une bande de fond de jante (2) entourant le disque de roue (3),
**caractérisée en ce que** la tôle d'acier du disque de roue (3) est formée par au moins trois couches d'acier superposées et assemblées les unes aux autres de façon indétachable en étant plaquées par laminage, couches d'acier dont la couche intérieure (6) se trouvant à l'intérieur présente une résistance plus faible que les couches extérieures (4, 5) se trouvant à l'extérieur.

2. Jante selon la revendication 1, **caractérisée en ce que** la tôle d'acier de la bande de fond de jante (2) est formée également par au moins trois couches d'acier superposées et assemblées les unes aux autres de façon indétachable en étant plaquées par laminage, couches d'acier dont la couche intérieure (6) se trouvant à l'intérieur présente une résistance plus faible que les couches extérieures (4, 5) se trouvant à l'extérieur.

3. Jante selon l'une quelconque des revendications précédentes, **caractérisée en ce que** l'épaisseur (D4, D5) des couches extérieures (4, 5) occupe respectivement de 5 % à 40 % de l'épaisseur totale (D) de la tôle d'acier du disque de roue (3).

4. Jante selon l'une quelconque des revendications précédentes, **caractérisée en ce qu'**au moins l'une des couches extérieures (4, 5) de la tôle d'acier du disque de roue (3) est en acier inoxydable.

5. Jante selon l'une quelconque des revendications précédentes, **caractérisée en ce que** les couches extérieures (4, 5) sont constituées du même matériau en acier.

6. Jante selon l'une quelconque des revendications précédentes, **caractérisée en ce qu'**au moins l'une des couches extérieures (4, 5) est produite à partir d'un acier qui, en plus du fer et des impuretés inévitables, contient (en % en poids) :
| | |
|---|---|
| C : | jusqu'à 0,24 %, |
| Mn : | jusqu'à 3,0 %, |
| Si : | jusqu'à 1,5 %, |
| P : | jusqu'à 0,05 %, |
| S : | jusqu'à 0,02 %, |
| Cr : | jusqu'à 25 %, |
| Mo : | jusqu'à 1,0 %, |
| Nb, Ti : | au total jusqu'à 0,2 %, |
| N : | jusqu'à 0,25 %, |
| Al : | jusqu'à 2,5 %, |
| V : | jusqu'à 0,25 %, |
| B : | jusqu'à 0,01 %, |
| Ni : | jusqu'à 8,0 %, |
| Cu : | jusqu'à 4,0 %. |

7. Jante selon la revendication 6, **caractérisée en ce que** la teneur en carbone (C) de l'acier de la couche extérieure (4, 5) est au maximum de 0,2 % en poids.

8. Jante selon la revendication 6 ou 7, **caractérisée en ce que** la teneur en manganèse (Mn) de l'acier de la couche extérieure (4, 5) est au maximum de 2,5 % en poids.

9. Jante selon l'une quelconque des revendications 6 à 8, **caractérisée en ce que** la teneur en silicium (Si) de l'acier de la couche extérieure (4, 5) est au maximum de 1,0 % en poids.

10. Jante selon l'une quelconque des revendications 6 à 9, **caractérisée en ce que** la teneur en aluminium (Al) de l'acier de la couche extérieure (4, 5) est au maximum de 2,0 % en poids.

11. Jante selon l'une quelconque des revendications 6 à 10, **caractérisée en ce que** l'acier de la couche extérieure (4, 5), en plus du fer et des impuretés inévitables, contient (en % en poids):
| | |
|---|---|
| C : | jusqu'à 0,05 %, |
| Cr : | de 20 % à 25 %, |
| Ni : | de 3,0 % à 8,0 %, |
| Mo : | de 0,05 % à 1,0 %, |
| N : | de 0,005 % à 0,25 % |
ainsi que, de façon optionnelle, un ou plusieurs éléments du groupe se composant de "Mn, Al, Si" conformément aux proportions qui suivent
| | |
|---|---|
| Mn : | de 0,1 % à 2,0 %, |
| Al : | jusqu'à 0,1 %, |
| Si : | jusqu'à 1,0 %. |

12. Jante selon l'une quelconque des revendications précédentes, **caractérisée en ce que** la couche intérieure (6) est produite à partir d'un acier qui, en plus du fer et des impuretés inévitables, contient (en % en poids) :
| | |
|---|---|
| C : | jusqu'à 0,25 %, |
| Al : | jusqu'à 2,0 %, |
| Mn : | jusqu'à 2,5 %, |
| Si : | jusqu'à 1,0 %, |
| Cr, Mo : | au total jusqu'à 1,0 %, |
| P : | jusqu'à 0,08 %, |
| S : | jusqu'à 0,02 %, |
| B : | jusqu'à 0,01 %, |
| V : | jusqu'à 0,2 %, |
| Nb, Ti : | au total jusqu'à 0,25 %. |

13. Jante selon l'une quelconque des revendications précédentes, **caractérisée en ce que** la tôle d'acier du disque de roue (3) est une tôle d'acier réalisée dans un feuillard laminé à chaud.

14. Jante selon l'une quelconque des revendications précédentes, **caractérisée en ce que** la couche intérieure (6) est formée par une tôle d'acier laminée à chaud se composant d'un acier de type *Dual Phase,* couche intérieure qui présente une limite apparente d'élasticité allant de 200 MPa à 550 MPa.

15. Jante selon l'une quelconque des revendications précédentes, **caractérisée en ce qu'**au moins l'une des couches extérieures (4, 5) se compose d'un acier martensitique, d'un acier de type *Complex Phase* ou d'un acier inoxydable à base de ferrite et d'austénite, couche extérieure dont la limite apparente d'élasticité va de 600 MPa à 1150 MPa.

16. Jante selon l'une quelconque des revendications précédentes, **caractérisée en ce qu'**au moins l'une des couches extérieures (4, 5) se compose d'un acier non oxydable ayant une teneur en chrome (Cr) d'au moins 20 % en poids, et la teneur en carbone (C) de la couche intérieure (6) est au maximum de 0,1 % en poids.
